# EUROPEAN PATENT APPLICATION

(11) **EP 4 456 439 A1**
(43) Date of publication of application: **30.10.2024**
(21) Application number: 24170141.6
(22) Date of filing: 15.04.2024
(51) Int. Cl.: H04B 5/72, H04B 5/79, H02J 7/34

(54) **NFC CONTROLLER**

(30) Priority: 28.04.2023 FR 2304335
(71) Applicant: STMicroelectronics International N.V., 1228 Plan-les-Ouates, Geneva (CH)
(72) Inventor: GRUNDRICH, Christophe, 38000 GRENOBLE (FR); KOVACIC, Kosta, 2312 OREHOVA VAS (SI); LEDUC, Bruno, 38500 VOIRON (FR)
(74) Representative: Cabinet Beaumont

(57) **Abstract**

The present disclosure relates to an NFC controller comprising a first node (NVBAT) configured to be coupled to a battery; a second node (NVDD_TX) configured to receive a regulated voltage from an external dc/dc converter coupled to said first node ; a third node (RF01, RF02) configured to be coupled to an radiofrequency output of the NFC controller; said third node been configured to, in a first mode, be coupled either to the first or second nodes, and in a second mode, either to the first node or to first and second nodes.

## Description

### Technical field

The present disclosure relates generally to NFC controllers.

### Background art

In NFC controllers, an amplifier (Transmitter Power amplifier, PA) is used between the power source (for example a battery) and an antenna to control the transmitted power. In order to reduce the size of the antenna or to increase the transmitted power, an amplified voltage may be supplied to the amplifier (commonly labelled PA) by an external step-up dc/dc converter.

Moreover, NFC controllers need to supply a certain voltage to the antenna even in power down mode. Unfortunately, in this mode, step-up dc/dc controllers usually operate by pulling down their output level to 0 (Pull down). Usual NFC controllers therefore need a dedicated dc/dc converter which is able to adopt a high impedance at its output (High Z) in power down mode.

### Summary

There is a need to provide NFC controllers which are compatible with non-dedicated dc/dc converters.

One embodiment addresses all or some of the drawbacks of known NFC converters.

One embodiment provides an NFC controller comprising:
a first node configured to be coupled to a battery;
a second node configured to receive a regulated voltage from an external dc/dc converter coupled to said first node ;
at least a third node configured to be coupled to an radiofrequency output of the NFC controller;
said third node been configured to, in a first mode, be coupled either to the first or second nodes, and in a second mode, either to the first node or to first and second nodes.

According to an embodiment, the first mode is an active mode and the second mode is a power down mode.

According to an embodiment, the third node is configured to, in the first mode, be coupled either to the first or to first and second nodes depending on the voltage level of the battery.

According to an embodiment, the third node is configured to, in the second mode, be coupled, either to the first node or to the first and second nodes depending on an active state of the dc/dc converter.

According to an embodiment, the NFC controller comprises a selection circuit configured to connect or disconnect first and second nodes depending on said active state of the dc/dc converter.

According to an embodiment, the selection circuit is configured to apply a voltage corresponding to the maximum between a voltage present at the first node and the regulated voltage to a polarization node.

According to an embodiment, the selection circuit comprises a first bypass circuit comprising a transistor with a first conduction node coupled to the first node and a second conduction node coupled to the second node.

According to an embodiment, the selection circuit comprises a second bypass circuit in parallel with the first bypass circuit,
the second bypass circuit comprising a transistor with a first conduction node coupled to the first node and a second conduction node coupled to the second node through a resistor.

According to an embodiment, a control signal of the gate of the transistor of the first and second bypass circuits depends on the active state of the dc/dc converter and on a comparison between the voltage on first and second nodes.

According to an embodiment, said control signal further depends on an activation state of the dc/dc converter.

According to an embodiment, the control signal of the first bypass circuit further depends on an activation state of the radiofrequency output of the NFC controller.

According to an embodiment, a body region of the transistor of the first and second bypass circuits is configured to be coupled to the polarization node.

According to an embodiment, the selection circuit comprises a third and a fourth transistors having their source connected to the polarization node and their drain respectively connected to the first and second nodes,
a control signal of the third and fourth transistors being configured to depend on a comparison between the voltages on first and second nodes.

According to an embodiment, the NFC controller comprises a first voltage regulator coupling the first node to the third node depending on the active state of the dc/dc converter.

According to an embodiment, the NFC controller comprises a second voltage regulator coupling the second node to the third node,
a first conduction node of the second voltage regulator being coupled to the second node,
a second conduction node of the second voltage regulator being coupled to the third node, and
a controlling node and a body region of the second voltage regulator being coupled to the polarization node.

One embodiment provides an electronic circuit comprising the controller as described above and an antenna coupled to said third node.

### Brief description of drawings

The foregoing features and advantages, as well as others, will be described in detail in the following description of specific embodiments given by way of illustration and not limitation with reference to the accompanying drawings, in which:
Figure 1 illustrates an electronic circuit according to an example;
Figure 2 illustrates an NFC controller according to an embodiment;
Figure 3 illustrates a circuit of the NFC controller of Figure 2 according to an embodiment;
Figure 4 illustrates a circuit of the NFC controller of Figure 2 according to another embodiment; and
Figure 5 illustrates a summarizing table of a functioning of the circuit of Figure 4.

### Description of embodiments

Like features have been designated by like references in the various figures. In particular, the structural and/or functional features that are common among the various embodiments may have the same references and may dispose identical structural, dimensional and material properties.

For the sake of clarity, only the operations and elements that are useful for an understanding of the embodiments described herein have been illustrated and described in detail.

Unless indicated otherwise, when reference is made to two elements connected together, this signifies a direct connection without any intermediate elements other than conductors, and when reference is made to two elements coupled together, this signifies that these two elements can be connected or they can be coupled via one or more other elements.

In the following disclosure, unless indicated otherwise, when reference is made to absolute positional qualifiers, such as the terms "front", "back", "top", "bottom", "left", "right", etc., or to relative positional qualifiers, such as the terms "above", "below", "higher", "lower", etc., or to qualifiers of orientation, such as "horizontal", "vertical", etc., reference is made to the orientation shown in the figures.

Unless specified otherwise, the expressions "around", "approximately", "substantially" and "in the order of" signify within 10 %, and preferably within 5 %.

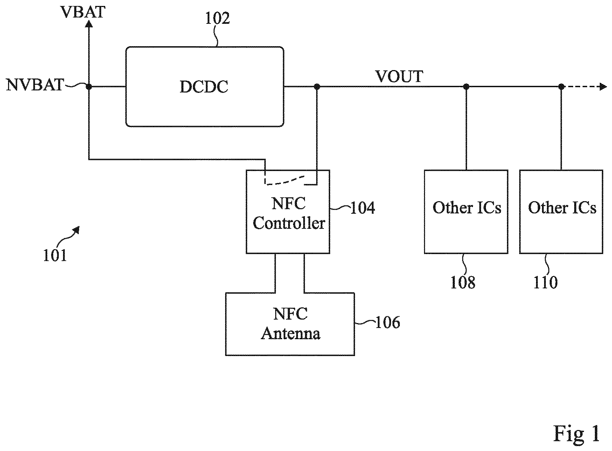

Figure 1 illustrates an electronic circuit 101 according to an example.

The electronic circuit 101 comprises a dc/dc converter 102 (DCDC) coupled, or preferably connected, to a node NVBAT, where a battery voltage VBAT is for example supplied, and supplying a regulated voltage at an output node VOUT.

The dc/dc converter 102 is for example a step-up dc/dc converter.

The electronic circuit 101 also comprises an NFC controller 104 which is coupled, or preferably connected, on one side to the node NVBAT and on another side to the output node VOUT.

The NFC controller 104 is further coupled, or preferably connected, to an NFC antenna 106 (NFC Antenna).

The NFC controller comprises a power amplifier (not illustrated on Figure 1). Transmitted power through the antenna is controlled by a voltage input of the power amplifier and by the antenna impedance.

In an example, the dc/dc converter supplies a voltage input to the power amplifier to implement smaller antenna and to increase transmission power TX.

In the represented example, other circuits 108, 110 (Other ICs) are coupled to the output of the dc/dc converter 102. Sharing the dc/dc converter between the NFC controller and other applications allow to minimize overall coil number at platform level and overall printed circuit board footprint.

Sharing the dc/dc converter between the NFC controller and other applications rises issues. Indeed, in power down modes, i.e. when the electronic circuit is off, NFC applications require the power amplifier of the NFC controller to remain supplied with a voltage, e.g the battery voltage in a low power mode, because the electronic circuit may be woken up by the presence of an electromagnetic field. It implies that, for NFC applications in power down modes, the dc/dc converter should remain with a high impedance (High Z) output, otherwise said, pulled to battery. But at the same time, in power down mode, other circuits 108, 110 are supposed to be off which is usually achieved by pulling down the dc/dc converter at 0. Otherwise said, with a usual NFC controller, it is not feasible to share simultaneously a same dc/dc converter with an NFC controller and other circuits 108, 110.

The following embodiments propose a different NFC controller comprising the battery voltage supply node NVBAT; a second node, which is coupled, or preferably connected, to the output of the dc/dc converter 102; and a third node configured to be coupled to a radiofrequency output of the NFC controller, which is for example coupled, or preferably connected, to the antenna. The third node is configured to, in a first mode, be coupled either to the first or second nodes, and in a second mode, either to the first node or to first and second nodes.

Such NFC controller allows the simultaneous use of a same dc/dc converter by an NFC controller and other circuits 108, 110. Also such NFC controller allows the use of pulled down to 0 dc/dc convertor as a NFC controller power supply.

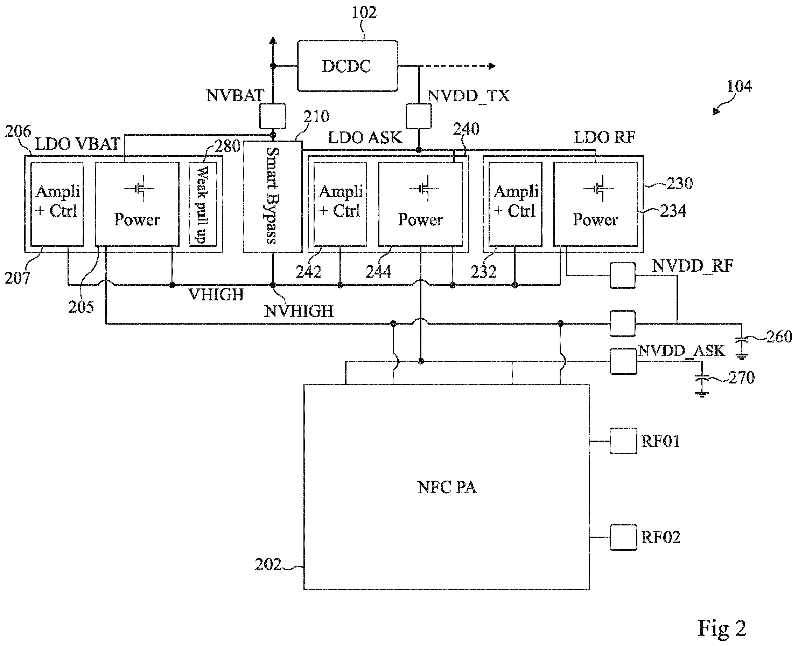

Figure 2 illustrates an NFC controller 104 according to an embodiment.

In the represented example, the NFC controller 104 comprises the node NVBAT which is configured to be coupled, or preferably connected, to a battery or to a voltage supply.

The NFC controller 104 further comprises the second node (NVDD_TX), which is coupled, or preferably connected, to the output of the dc/dc converter and which is configured to receive a regulated voltage from the dc/dc converter 102. The dc/dc converter 102 is for example external or internal to the NFC controller.

An active state of the dc/dc converter is for example reported in a bit (NEVER_TIED_TO_GND). When NEVER_TIED_TO_GND=0, the dc/dc converter output can be pulled down to 0. When NEVER_TIED_TO_GND=1, the dc/dc converter output is set to a high impedance mode (High Z) for example by being pulled to the battery voltage or above.

In the represented example, the NFC controller further comprises a selection circuit 210 (Smart Bypass) configured to connect or disconnect NVBAT node from second node NVDD_TX depending on the active state (NEVER_TIED_TO_GND) of the dc/dc converter and for example also depending on a comparison between the voltage VDD_TX at the dc/dc converter output and the battery voltage VBAT.

The selection circuit 210 is further configured to apply a voltage (VHIGH), corresponding to the maximum between the battery voltage VBAT present at the node NVBAT and the regulated voltage VDD_TX present at the second node NVDD_TX, to a polarization node (NVHIGH).

The NFC controller 104 comprises an NFC amplifier 202 (NFC PA) with for example two input nodes NVDD_ASK and NVDD_RF respectively coupled, or preferably connected, to ground through a first capacitance 260 and a second capacitance 270. A single input node could be envisaged by the person of the art. The NFC amplifier 202 has for example one or two outputs at nodes RF01, RF02 depending on the number of inputs. The nodes RF01, RF02 are radiofrequency nodes for example configured to be coupled, or preferably connected, to the antenna 106. The NFC amplifier 202 comprises for example impedance adaptation and signal amplification circuits.

The NFC controller 104 further comprises a first voltage regulator 206 (LDO VBAT) coupling or disconnecting the battery node NVBAT and the nodes RF01, RF02 depending on the active state NEVER_TIED_TO_GND of the dc/dc converter. In an example, the first regulator 206 is configured to couple NVBAT to RF01 when the dc/dc converter 102 is in a pull-down to 0 mode (NEVER_TIED_TO_GND=0).

The first voltage regulator 206 comprises one or several power transistors 205 (Power), for example PMOS transistors, having their control parts and body region 207 (Ampli+Ctrl) coupled, or preferably connected, to the polarization node NVHIGH in order to prevent leakage of P+/Nwell diodes formed in the body region of the PMOS transistors. In an example, a first conduction node of a transistor of the first voltage regulator 206 is coupled to the second node NVDD_TX and a second conduction node of the first voltage regulator 206 is coupled to the nodes RF01 and RF02 by the intermediate of a weak pull up resistor 280 (Weak pull up) and to the node NVDD_RF.

The NFC controller 104 further comprises for example a second voltage regulator 230 (LDO RF) coupling the second node NVDD_TX to the nodes RF01 and RF02 by the intermediate of the node NVDD_RF. The second voltage regulator 230 comprises for example one or several power transistors 234 (Power), for example PMOS transistors, having their control parts and body region 232 (Ampli+Ctrl) coupled, or preferably connected, to the polarization node NVHIGH. In an example, a first conduction node of a transistor of the second voltage regulator 230 is coupled to the second node NVDD_TX and a second conduction node of the second voltage regulator is coupled to the node RF01 by the intermediate of a highly resistive resistor and by the intermediate of the node NVDD_RF.

In the case of amplitude modulation, the amplifier has two radiofrequency nodes RF01 and RF02, the NFC controller 104 further comprises an optional third voltage regulator 240 (LDO ASK) coupling the second node NVDD_TX with the voltage VDD_TX to the nodes RF01 and RF02 by the intermediate of the node NVDD_ASK. The third voltage regulator 240 comprises for example one or several power transistors 244 (Power), for example PMOS transistors, having their control parts and body region 242 (Ampli+Ctrl) coupled, or preferably connected, to the polarization node NVHIGH. In an example, a first conduction node of a transistor of the third voltage regulator is coupled to the second node NVDD_TX and a second conduction node of the second voltage regulator is coupled to the node RF02 by the intermediate of the node NVDD_ASK.

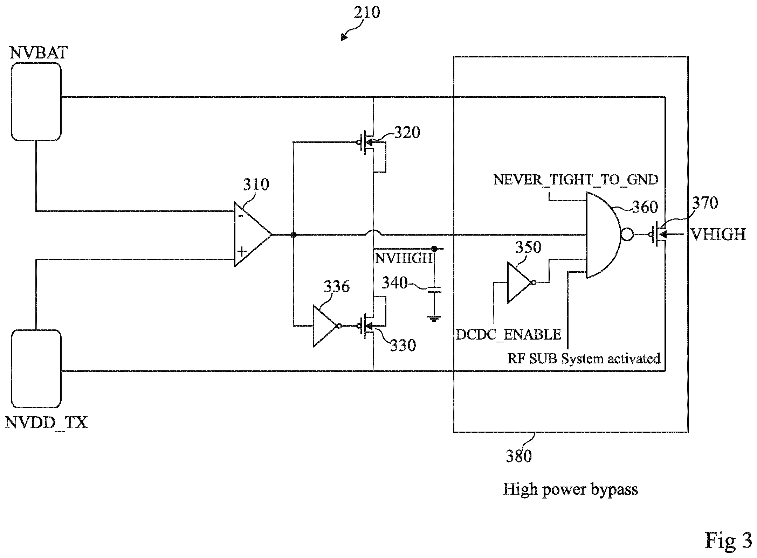

Figure 3 illustrates a circuit of the NFC controller 104 of Figure 2 according to an embodiment. More precisely, Figure 3 illustrates the selection circuit 210 of Figure 2 according to an embodiment.

In the represented example, the selection circuit 210 comprises a first bypass circuit 380 (High power bypass). The first bypass circuit 380 comprises a transistor 370, for example a PMOS, with a conduction node coupled to the first node NVBAT and another conduction node coupled to the second node NVDD_TX.

A body region of the transistor 370 is configured to be coupled to the polarization node NVHIGH.

A control signal of the gate of the transistor 370 of the first bypass circuit is supplied by a circuit 360 which takes as input a signal comprising for example the active state NEVER_TIED_TO_GND of the dc/dc converter.

Another input of the circuit 360 is for example configured to receive a comparison signal, issued by a circuit 310, which is at VDD_TX when the voltage present on NVDD_TX node is superior to the voltage at first node NVBAT, and at VBAT level when VDD_TX≤VBAT.

Another input of the circuit 360 is for example configured to receive the inverse signal 350 of a signal (DCDC_ENABLE) which comprises one or several bits which indicate if the dc/dc converter 102 is enabled or not.

A further input of the circuit 360 is a signal (RF SUB System activated) comprising one or several bits which are related to a functioning state of the NFC amplifier 202. An example of a functioning state of the NFC amplifier is for example a communication state in which data transmission or reception are ongoing. In other words, in this communication state, the RF SUB System activated bit is for example representative of an activation state of the radiofrequency outputs RF01 and RF02 of the NFC controller. An example of another functioning state of the NFC amplifier is for example a standby state, or low power, in which the NFC amplifier 202 can be woken up by an upcoming magnetic field from another NFC device.

The circuit 360 is configured to perform a NAND function on these four signals. If all of the signals at the input of the circuit 360 have a high-level state then the signal output will be at a low-level state which enables the conduction of the transistor 370 and therefore shorting NVBAT and NVDD_TX nodes (in the case where transistor 370 is a PMOS transistor). If one of the signals supplying the circuit 360 has a low-level state then the output signal remains at a high level blocking the conduction of the transistor 370.

In the represented example, the selection circuit 210 comprises a third 320 and a fourth 330 transistors having their source coupled, or preferably connected, to the polarization node NVHIGH and their drain respectively coupled, or preferably connected, to the first and second nodes NVBAT, NVDD_TX.

The body regions of third and fourth transistors 320, 330 are coupled, or preferably connected, to the polarization node NVHIGH.

A controlling node of the third transistor 320 is coupled, or preferably connected, to the comparator 310 output and a controlling node of the fourth transistor 330 is coupled to the comparator 310 output with the intermediate of an inverter circuit 336. When VDD_TX>VBAT, the fourth transistor 330 is in a conducting state and the third transistor 320 is in a non-conducting state. When VDD_TX≤VBAT, the third transistor 320 is in a conducting state and the fourth transistor 330 is in a non-conducting state.

In an example, third and fourth transistors 320, 330 are PMOS transistors which allows a lower impedance value than a transistor NMOS (Vgs is higher with high Vd). In order to have a similar impedance with a NMOS, Vg would be higher than VHIGH voltage.

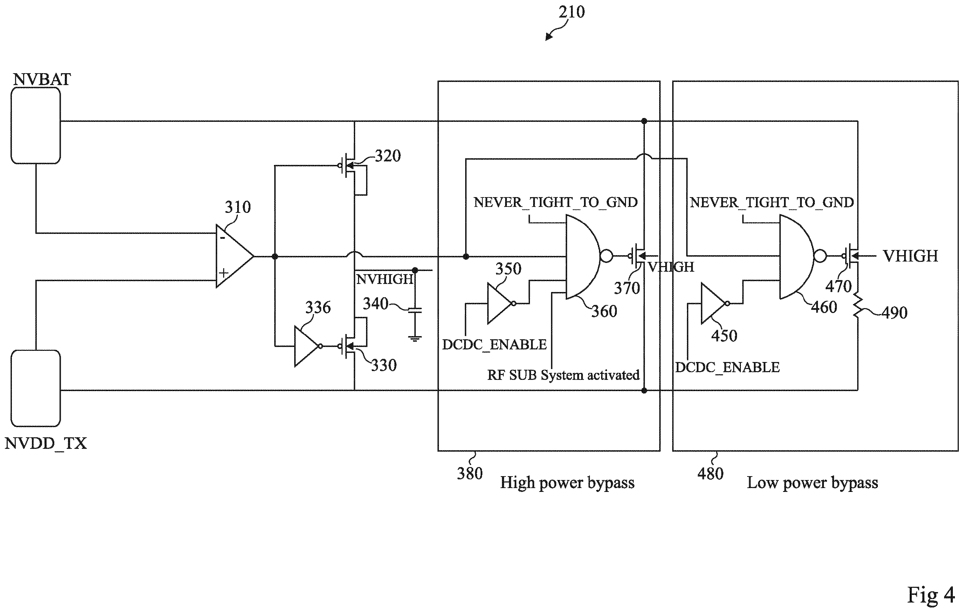

Figure 4 illustrates a circuit of the NFC controller of Figure 2 according to another embodiment. More precisely, Figure 4 illustrates the selection circuit 210 of Figure 2 according to another embodiment. The example of Figure 4 is similar to the example of Figure 3 except that the selection circuit 210 further comprises a second bypass circuit 480 (Low power bypass) in parallel with the first bypass circuit 380.

The second bypass circuit 480 comprises for example a transistor 470 with a first conduction node coupled to the node NVBAT and a second conduction node coupled to the second node NVDD_TX through a resistor 490 with a typical resistance value of 100 Ohms to 1 kOhms, for example 150 Ohms.

A control signal of the gate of the transistor 470 is supplied by a circuit 460 which has similar inputs as the circuit 360 of the first bypass circuit 380 except that the input RF SUB System activated is not connected to the inputs of the circuit 460.

In the example of Figure 4, depending on the functioning mode of the NFC amplifier 202 as specified in the bit "RF SUB System activated", the first and/or the second bypass circuits will be selected. In the communication state, the first bypass circuit 380 will be activated and, in the standby state, the second bypass circuit 480 will be activated and the first bypass circuit 380 will be deactivated. In this case, during a start up, the transistor 470 is first closed before the transistor 370. The resistor 490 ensures that a smooth VDD_TX voltage rising up and that no destructive current is rushing.

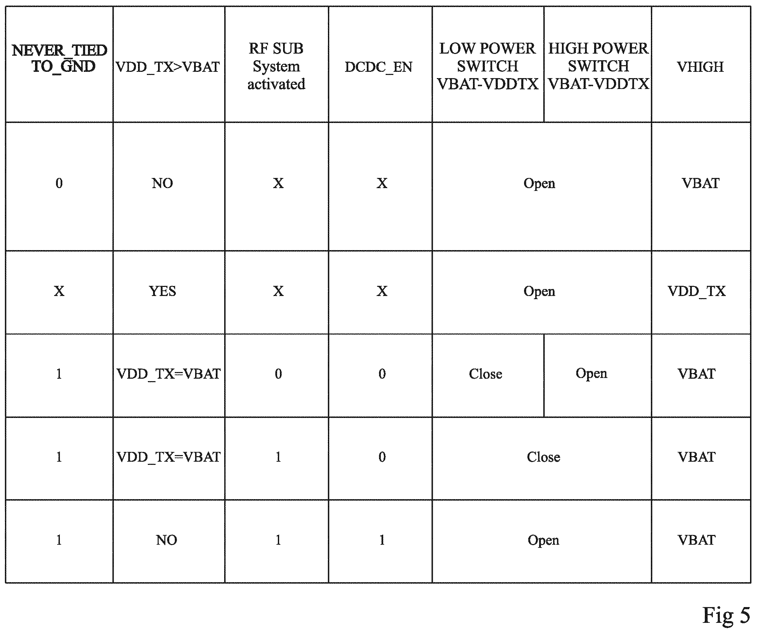

Figure 5 illustrates a summarizing table of a functioning of circuit of Figure 4. The columns of the table represent respectively the values taken by the bit NEVER_TIED_TO_GND, the result of the operation VDD_TX>VBAT, the bit RF SUB System activated, the bit DCDC_EN indicating if the dc/dc converter 102 is enabled or not, a state of the transistor 470 (LOW POWER SWITCH VBAT-VDDTX), a state of the transistor 370 (HIGH POWER SWITCH VBAT-VDDTX), and the values of the voltage present at the node NVHIGH.

These following configurations are implemented while the first regulator 206 is configured to couple NVBAT to RF01 and RF02 when the dc/dc converter 102 is in a pull-down to 0 mode (NEVER_TIED_TO_GND=0).

In a first configuration, the bit NEVER_TIED_TO_GND is set to 0, VDD_TX<=VBAT, the bit RF SUB System activated is set to 0 or 1, the bit DCDC_EN is set to 0 or 1. It results that transistors 370 and 470 are in an open state which means that they act as a switch in a non-conducting state, and VHIGH=VBAT. In this configuration, NVBAT and NVDD_TX nodes are not connected. VBAT is for example supplied to the amplifier 202 through the first voltage regulator 206 for example for another NFC device detection if RF SUB System activated is set to 0 or for communication if RF SUB System activated is set to 1.

In a second configuration, the bit NEVER_TIED_TO_GND is set to 0 or 1, VDD_TX>VBAT, the bit RF SUB System activated is set to 0 or 1 and the bit DCDC_EN is set to 0 or 1. It results in that the transistors 370 and 470 are in an open state, and VHIGH=VDD_TX. In this second configuration, if NEVER_TIED_TO_GND is set to 0, NVBAT and NVDD_TX nodes are not connected. In this case, VBAT is for example supplied to the amplifier 202 through the first voltage regulator 206 for example for another NFC device detection.

In a third configuration, the bit NEVER_TIED_TO_GND is set to 1, VDD_TX=VBAT, the bit RF SUB System activated and the bit DCDC_EN are set to 0. It results in that the transistor 470 is in an open state, the transistor 370 is closed which means that it is equivalent to a switch in a conducting configuration, and VHIGH=VBAT. In this configuration, NVBAT is coupled, or preferably connected, to NVDD_TX through the resistor 490. NVBAT node is therefore coupled to the second voltage regulator 230 through the resistor 490 for example to supply the amplifier 202 in a power down mode.

In a fourth configuration, the bit NEVER_TIED_TO_GND is set to 1, VDD_TX=VBAT, the bit RF SUB System activated is set to 1, the bit DCDC_EN is set to 0. It results in that the transistors 370 and 470 are in a closed state and VHIGH=VBAT. In this configuration, NVBAT and NVDD_TX nodes are connected without a resistor and VBAT is supplied to the amplifier 202 through the second voltage regulator 230 for example for detection of another NFC device or the communication with another NFC device.

In a fifth configuration, the bit NEVER_TIED_TO_GND is set to 1, VDD_TX<VBAT, the bit RF SUB System activated and the bit DCDC_EN are set to 1. It results in that the transistors 370 and 470 are in an open state and VHIGH=VBAT. In this fifth configuration, NVBAT and NVDD_TX nodes are not connected. In this case, the node NVBAT is for example coupled, to the amplifier 202 through the first voltage regulator 206.

The selection device 210 adapts automatically the type of connection (connected/coupled, or disconnected) between NVBAT and NVDD_TX nodes based on the active state (High Z or pull down) of the dc/dc controller 102, the state of the NFC amplifier 202 (active communication or stand-by), and powering modes (on battery or dc/dc enabled) of the NFC system.

Various embodiments and variants have been described. Those skilled in the art will understand that certain features of these embodiments can be combined and other variants will readily occur to those skilled in the art. In particular, the third voltage regulator 240 is optional, and is for example used for amplitude modulation. The NFC controller could be implemented without regulator 240 in case of on-off Key modulation with a power amplifier 202 with a single radiofrequency output RF01.

To sum up, the different configurations of the selection device 210 and the first voltage regulator 206 leads to different functioning modes.

In a mode where the dc/dc converter 102 is set to High Z, nodes NVBAT and NVDD_TX are not shorted and the first voltage regulator 206 is in an open position. In this mode, the NFC amplifier 202 is for example in an active mode and the output RF01 is supplied by a current generated through the dc/dc converter 102 and the second voltage regulator 230.

In another mode where the dc/dc converter 102 is set to High Z, nodes NVBAT and NVDD_TX can be connected through the selection device 210. In this mode, the NFC amplifier 202 is for example in an active mode and the outputs RF01 and RF02 are supplied by a current generated by the battery then flowing through the node NVBAT and the second voltage regulator 230.

In a further mode where the dc/dc converter 102 is set to pull down to zero mode, nodes NVBAT and NVDD_TX disconnected by the selection device 210. In this mode, the NFC amplifier 202 is for example in an active mode and the outputs RF01 and RF02 are supplied by a current generated by the battery then flowing through the node NVBAT and the first voltage regulator 206.

In a further mode where the dc/dc converter 102 is set to pull down to zero mode, nodes NVBAT and NVDD_TX are disconnected by the selection device 210. In this mode, the NFC amplifier 202 is for example in power down mode and the output RF01 is biased by the battery through the weak pull up of the first voltage regulator 206.

In a further mode where the dc/dc converter 102 is set to High Z mode, nodes NVBAT and NVDD_TX are connected through the selection device 210. In this mode, the NFC amplifier 202 is for example in power down mode and the outputs RF01 and RF02 are biased by the battery through the node NVBAT and the second voltage regulator 230.

Finally, the practical implementation of the embodiments and variants described herein is within the capabilities of those skilled in the art based on the functional description provided hereinabove. In particular, additional bypass circuits could be arranged in parallel of first and second bypasses and with a resistor with a resistance value different from the resistance of the resistor 490 in order to adapt the low power functioning.

The person of the art will adapt the circuits 360 and/or 460 and their incoming inputs in the case he wants to implement transistors 370 and/or 470 as NMOS transistors. In this case the function of the circuit 360, 460 would be a AND function.

## Claims

1. An NFC controller comprising:
a first node (NVBAT) configured to be coupled to a battery;
a second node (NVDD_TX) configured to receive a regulated voltage from an external dc/dc converter coupled to said first node ;
at least a third node (RF01, RF02) configured to be coupled to an radiofrequency output of the NFC controller;
said third node been configured to, in a first mode, be coupled either to the first or second nodes, and in a second mode, either to the first node or to first and second nodes.

2. The controller according to claim 1, wherein the first mode is an active mode and the second mode is a power down mode.

3. The controller according to claim 1 or 2, wherein the third node is configured to, in the first mode, be coupled either to the first or to first and second nodes depending on the voltage level of the battery.

4. The controller according to any of claim 1 to 3, wherein the third node is configured to, in the second mode, be coupled, either to the first node or to the first and second nodes depending on an active state (NEVER_TIED_TO_GND) of the dc/dc converter.

5. The controller according to any of claim 1 to 4, wherein the NFC controller comprises a selection circuit (bypass) configured to connect or disconnect first and second nodes depending on said active state (NEVER_TIED_TO_GND) of the dc/dc converter.

6. The controller according to any of claim 5, wherein the selection circuit (bypass) is configured to apply a voltage (VHIGH) corresponding to the maximum between a voltage present at the first node (VBAT) and the regulated voltage (VDD_TX) to a polarization node (NVHIGH).

7. The controller according to claim 5 or 6, wherein the selection circuit (210) comprises a first bypass circuit (380) comprising a transistor (370) with a first conduction node coupled to the first node (NVBAT) and a second conduction node coupled to the second node (NVDD_TX).

8. The controller according to claim 7, wherein the selection circuit (210) comprises a second bypass circuit (480) in parallel with the first bypass circuit (380),
the second bypass circuit comprising a transistor (470) with a first conduction node coupled to the first node (NVBAT) and a second conduction node coupled to the second node (NVDD_TX) through a resistor (490).

9. The controller according to claim 8, wherein a control signal of the gate of the transistor of the first and second bypass circuits depends on the active state (NEVER_TIED_TO_GND) of the dc/dc converter and on a comparison between the voltage on first and second nodes.

10. The controller according to claim 9, wherein said control signal further depends on an activation state (DCDC_ENABLE) of the dc/dc converter.

11. The controller according to claim 9 or 10, wherein the control signal of the first bypass circuit further depends on an activation state of the radiofrequency output of the NFC controller.

12. The controller according to anyone of claims 8 to 11, wherein a body region of the transistor of the first and second bypass circuits is configured to be coupled to the polarization node (NVHIGH).

13. The controller according to claim 12, wherein the selection circuit (bypass) comprises a third (320) and a fourth (330) transistors having their source connected to the polarization node (NVHIGH) and their drain respectively connected to the first and second nodes (NVBAT, NVDD_TX),
a control signal of the third and fourth transistors being configured to depend on a comparison between the voltages (VBAT, VDD_TX) on first and second nodes.

14. The controller according to anyone of claims 1 to 13, wherein the NFC controller comprises a first voltage regulator (LDO VBAT) coupling the first node to the third node depending on the active state (NEVER_TIED_TO_GND) of the dc/dc converter.

15. The controller according to anyone of claims 6 to 14, wherein the NFC controller comprises a second voltage regulator (LDO RF) coupling the second node to the third node,
a first conduction node of the second voltage regulator being coupled to the second node,
a second conduction node of the second voltage regulator being coupled to the third node, and
a controlling node and a body region of the second voltage regulator being coupled to the polarization node (NVHIGH).

16. An electronic circuit comprising the controller according to anyone of claims 1 to 15 and an antenna coupled to said third node.
